# EUROPÄISCHE PATENTSCHRIFT

(11) **EP 1 633 035 B1**
(45) Veröffentlichungstag und Bekanntmachung des Hinweises auf die Patenterteilung: **21.05.2014**
(21) Anmeldenummer: 05107450.8
(22) Anmeldetag: 12.08.2005
(51) Int. Cl.: H02K 3/18, H02K 3/52, H02K 15/095

(54) **Verfahren zum Wickeln einer elektrischen Wicklung für eine elektrische Maschine**
Method of winding an electric coil for an electrical machine
Procédé d'enroulement d'un bobinage électrique pour une machine électrique

(30) Priorität: 03.09.2004 DE 102004042737
(43) Veröffentlichungstag der Anmeldung: 08.03.2006
(73) Patentinhaber: ROBERT BOSCH GMBH, 70442 Stuttgart (DE)
(72) Erfinder: Sponar, Heiko, 76437 Rastatt (DE); Huber, Michael, 77836 Rheinmuenster (DE); Hauser, Peter, 77833 Ottersweier (DE)

(56) Entgegenhaltungen:
- EP-A1- 0 064 105
- DE-A1- 19 818 432
- US-A- 6 127 753
- US-A1- 2002 113 517

## Beschreibung

### Stand der Technik

Die Erfindung geht aus von einem Verfahren zum Aufwickeln einer elektrischen Wicklung aus einem Wickeldraht auf einen magnetisch leitfähigen Körper eines Hauptelements, wie Stator oder Rotor, einer elektrischen Maschine, nach dem Oberbegriff des Anspruchs 1.

Bei einem bekannten Verfahren zum Aufbringen einer aus Ringspulen bestehenden Statorwicklung auf einen Statorkörper (EP 1 235 325 A1) wird ein Spulenträger oder Spulenkörper aus elektrisch isolierendem Werkstoff, der ein Doppel-T-förmiges Längsprofil mit einem bogenförmigen langen Querschenkel, einem bogenförmigen kurzen Querschenkel und einem die beiden Querschenkel miteinander einstückig verbindenden, hohlkastenförmigen Längssteg aufweist, mit dem hohlen Längssteg auf ein Wickelwerkzeug aufgeschoben. Am Spulenträger wird der Anfang des Wickeldrahts, vorzugsweise eines isolierten Kupferdrahts, festgelegt, und durch Rotation des Wickelwerkzeugs, das zugleich eine axiale Hin- und Herbewegung ausführt, wird der Wickeldraht auf den Längssteg des Spulenträgers zu einer Ringspule aufgewickelt, die sich an den beiden Querschenkeln abstützt. Das Ende des Wickeldrahts wird an dem Spulenträger befestigt. Der Spulenträger mit aufgewickelter Ringspule wird vom Werkzeugträger abgezogen und auf einem Zahn mit T-Profil aufgeschoben. Die die Ringspulen mit Spulenträger tragenden Einzelzähne werden mittels einer Schwalbenschwanzverbindung in den Rückschlussring des Statorkörpers gefügt.

Ein solches Wickelverfahren eignet sich nicht zum Einwickeln einer ebenfalls aus Ringspulen bestehenden Wicklung in einen Stator- oder Rotorkörper, bei dem Rückschlussjoch oder -ring und Zähne mit Zahnschaft und Zahnschuh miteinander einstückig ausgebildet sind und der z.B. aus einer Vielzahl von aneinanderliegenden Blechlamellen axial paketiert ist, wobei jede Blechlamelle als Komplettzuschnitt ausgebildet ist.

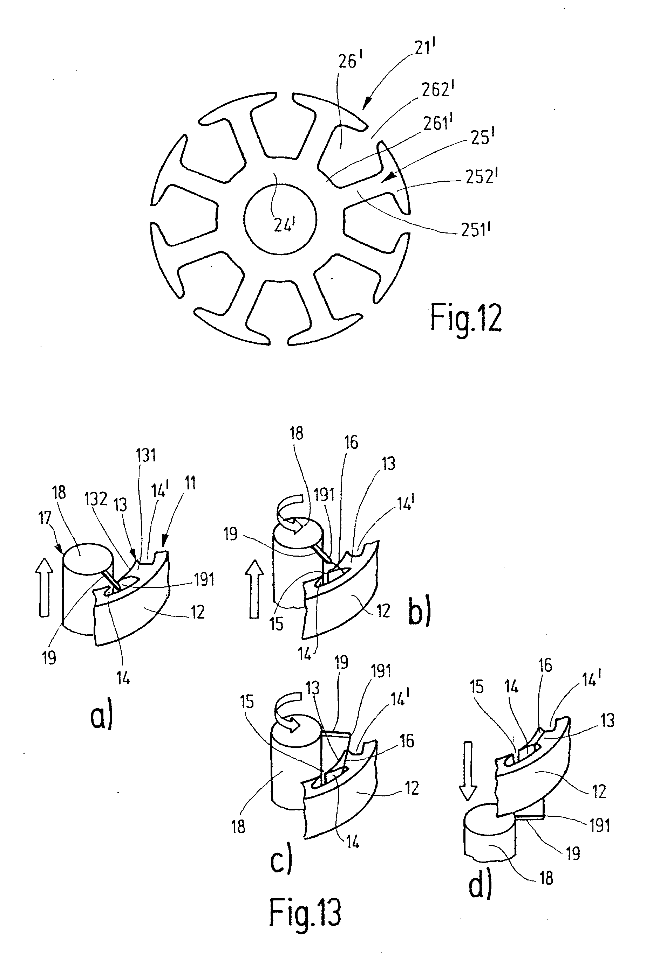

Ein bekanntes Verfahren zum Aufwickeln einer elektrischen Wicklung auf einen solchen Statorkörper eines Innenläufermotors ist in Fig. 13 in vier Skizzen illustriert. Dabei ist der Statorkörper 11 mit Rückschlussring 12 und Statorzähnen 13, die jeweils einen radial vom Rückschlussring 12 abstehenden Zahnschaft 131 und einen am rückschlussringfernen Ende des Zahnschafts 131 angeformten Zahnkopf oder Zahnschuh 132 aufweisen nur ausschnittweise dargestellt. Durch die Statorzähne 13 werden in dem Statorkörper 11 axial verlaufende, stirnseitig offene Nuten 14 ausgebildet, deren Nutgrund von dem Rückschlussring gebildet ist und deren Nutöffnung von Zahnschuhen benachbarter Statorzähne bis auf einen Nutspalt 15 abgedeckt ist. Zur Fertigung des Stators wird eine solcher Statorkörper 11 mit einer Statorwicklung bewickelt, die auf den Statorzähnen 13 aufgewickelte Ringspulen aufweist, deren Spulenseiten in den Nuten 14 einliegen und deren die Spulenseiten verbindende, bogenförmige Spulenköpfe über die Stirnflächen der Zahnschäfte 131 verlaufen. Die Zahnschuhe 132 sichern die Spulen gegen radiales Abgleiten. Die Spulen werden in einem Wickelautomaten aus einem Wickeldraht 16 in mehreren Wickellagen gewickelt. Hierzu wird der von einem Vorratswickel abgezogene Wickeldraht 16, vorzugsweise ein isolierter Kupferdraht, einer Drahtführungsvorrichtung 17 zugeführt, die den Wickeldraht 16 in den in den Wickelautomaten eingespannten Statorkörper 11 einzieht. Die Drahtführungsvorrichtung 17 besteht aus einer im hohlen Innern des Statorkörpers 11 angeordneten, axial ausgerichteten Nadel 18 und einer radial von der Nadel 18 abstehenden Düse 19 mit einem Drahtausziehende 191, aus dem der Wickeldraht 16 austritt.

Wie in Fig. 13 in sich wiederholenden Wickelschritten a) bis d) illustriert ist, erfolgt das Einwickeln des Wickeldrahts 16 in den Statorkörper 11 bei gleichzeitiger Bildung der auf den Statorzähnen 13 sitzenden Ringspulen wie folgt:

Die Düse 19 der Nadel 18 ragt durch den Nutspalt 15 in die Nut 14 hinein und führt eine Axialbewegung von unten nach oben aus, wobei sie nach Zurücklegen des maximalen Hubs der Nadel 18 an der Stirnseite aus der Nut 14 austritt. Der dabei aus dem Drahtausziehende 191 ausgezogene Drahtabschnitt liegt in der Nut 14, z.B. am Nutgrund, ein (Fig. 13a). Nach Erreichen der maximalen Hubposition wird der Statorkörper 11 um einen Statorzahn 13 gedreht (Fig. 13b), so dass sich die Düse 19 über der Stirnseite der nächsten Nut 14' befindet (Fig 13c). Nun wird durch eine axiale Abwärtsbewegung der Nadel 18 die Düse 19 in der benachbarten Nut 14' nach unten verschoben, wobei die Düse 19 in dem Nutspalt 15 entlang gleitet. Dadurch wird einerseits der Wickeldraht 16 über die Stirnseite des Statorzahns 13 gelegt und andererseits ein weiterer Abschnitt des Wickeldrahts 16 in die Nachbarnut 14' eingezogen. Hat die Nadel 18 ihre untere maximale Hubposition erreicht, so ist die Düse 19 stirnseitig aus der Nut 14 ausgetreten (Fig. 13d). Nunmehr wird der Statorkörper 11 um den gleichen Zahnschritt zurückgedreht, und die Nadel 18 führt wieder eine Hubbewegung nach oben aus (Fig. 13a), wobei ein zweiter Wickeldrahtabschnitt 16 in die erste Nut 14 eingelegt wird. Hat die Nadel 18 ihre obere maximale Hubposition erreicht (Fig. 13b), so wird wiederum der Statorkörper 11 in gleiche Richtung wie zuvor um einen Zahnschritt gedreht und die Hubnadel führt wiederum eine Hubbewegung bis in ihre untere Endposition aus. Danach wird der Statorkörper 11 wiederum um einen Zahnschritt zurückgedreht. Die beschriebenen Vorgänge werden solange wiederholt, bis die gewünschte Zahl von Windungen der Ringspule auf den Statorzahn 13 aufgewickelt ist. Danach wird der Statorkörper 11 soweit gedreht, dass die Düse 19 über eine der beiden Nuten steht, die von demjenigen Statorzahn begrenzt werden, der als nächstes bewickelt werden muss. Bei dieser Wickeltechnik ist es wichtig, dass innerhalb der Nuten der Verfahrweg für die Düse 19 freigehalten wird; denn ein im Verfahrweg der Düse 19 sich befindlicher Drahtabschnitt kann durch die Düse 19 beschädigt werden, was zur Windungs- bzw. Masseschluss der Wicklung führt.

Ein bekannter Gleichstrommotor (DE 198 18 432 A1) weist einen magnetisch leitfähigen Statorkern mit Rückschlussring und angeformten, radial abstehenden, jeweils einen Zahnschaft und einen Zahnschuh aufweisenden Zähnen, die zwischen sich axial verlaufende stirnseitig offene Nuten ausbilden, und eine den Statorkern bedeckende Maske auf, auf die die elektrische Wicklung des Gleichstrommotors in Form von Spulen aufgewickelt ist. Die Maske weist eine die Längs- und Stirnseiten der Zahnschäfte abdeckende Zahnverkleidung und eine die die Nutgründe bildende Abschnitte des Rückschlussrings bedeckende Nutgrundbekleidung auf. Unmittelbar an der Nutgrundbekleidung ist eine mit um die Zahnverkleidung umlaufende Stufe einstückig mit Zahnverkleidung und Nutgrundbekleidung ausgebildet. Am freien, inneren Ende einer jeden Zahnverkleidung ist ein umlaufender Flansch ausgebildet. Die Maske ist axial in zwei gleich ausgebildeten Hälfte geteilt, von denen die eine Hälfte von unten und die andere Hälfte von oben auf den Statorkörper aufgesetzt ist, so dass jeder der umlaufenden Flansche in der oberen und unteren Hälfte der Maske U-Form aufweist. Auf die Zahnverkleidung zwischen Flansch und Nutgrundbekleidung ist jeweils eine Ringspule der elektrischen Wicklung aufgewickelt.

Bei einem bekannten Verfahren zum Einwickeln einer elektrischen Wicklung in die Nuten eines Statorkörpers einer elektrischen Maschine (US 2002/0113517 A1) wird der Wickeldraht mittels einer Drahtführungsvorrichtung mit Wickelnadel auf eine isolierende Maske aufgewickelt, die die Statorzähne im Nut- und Zahnbereich abdeckt. Die Maske trägt im Bereich der radial nach außen bzw. radial nach innen weisenden Stirnseite eines jeden Statorzahns radial beabstandete, axial überstehende Flansche, zwischen die die einzelnen Ringspulen der Wicklung eingewickelt werden. Beim Wickeln wird die Drahtführungsvorrichtung ausschließlich axial längs des jeweiligen Statorzahns verschoben und oberhalb und unterhalb der Stirnseiten des Statorzahns geschwenkt, um den Wickeldraht über die von der Maske bedeckten Stirnseiten der Statorzähne zu ziehen. Die Wickelnadel führt dabei zu keinem Zeitpunkt eine radiale Bewegung aus, sondern verbleibt konstant entweder in dem vorderen Teil der zwischen den Statorzähnen gebildeten Nuten oder in der Nutöffnung zwischen den Zahn- oder Polschuhen benachbarter Statorzähne. Um beim Wickeln den Wickeldraht lagerichtig auf der Schablone innerhalb der Nuten zu positionieren, ist die Maske mit einer Wickelhilfe versehen. Diese Wickelhilfe weist eine Vielzahl von Einsätzen aus elektrischem Isolationsmaterial auf, wie auf der Maske im Bereich der Stirnseiten der Statorzähne zwischen den beiden Flanschen aufliegen. Jeder Einsatz hat einen kreissegmentförmigen Querschnitt, dessen Segmentbreite etwa der Breite der Maske im Bereich der Stirnseiten der Statorzähne entspricht und dessen Segmenthöhe in Radialrichtung sich verkleinert, am inneren Flansch maximal und am äußeren Flansch minimal ist. Zusätzlich können auf die Maske noch dem inneren und äußeren Flansch zugeordnete, axial abstehende Zapfen vorgesehen werden, um die der Wickeldraht geführt wird, bevor er in die Nuten eingezogen wird.

### Vorteile der Erfindung

Das erfindungsgemäße Verfahren mit den Merkmalen des Anspruchs 1 hat den Vorteil, dass durch die Verwendung der Maske aus elektrisch isolierendem Material, die zur Isolierung des magnetisch leitfähigen Körpers auf letzteren aufgesetzt wird und der Ausbildung dieser Maske als Wickelhilfe beim Einwickeln des Wickeldrahts der Wickeldraht in den Nuten sehr präzise geführt und positioniert werden kann, so dass einerseits der Verfahrweg für die Düse zuverlässig freigehalten werden kann - und damit keine Beschädigungen des Wickeldrahts auftreten können - und andererseits durch eine genaue Platzierung des Wickeldrahts in den Nuten der zur Belegung zur Verfügung stehenden Nutraum besser ausgenutzt wird, so dass eine Verbesserung des Nutfüllfaktors erreicht wird. Durch die Stufung in den beiden voneinander abgekehrten Stirnseiten der Masken vor jeder Stirnfläche eines Zahnschaftes werden die in den Nuten verlaufenden, die Spulenseiten bildenden Wickeldrahtabschnitte in gleicher Weise radial exakt positioniert und - da der Wickeldrahteinzug mit Drahtzug erfolgt - kraftschlüssig auf den Zähnen festgelegt. Damit ist eine zufällig andere Verlegung eines Wickeldrahtabschnitts oder eine ungewollte Verlagerung eines Wickeldrahtabschnitts in den Nuten, die zu einer schlechten Nutraumausnutzung führt, verhindert. Durch die Steuerung der Drahtführungsvorrichtung taucht das Drahtausziehende der Drahtführungsvorrichtung zu keinem Zeitpunkt des Wickelvorgangs in den Nutraum ein, so dass im Nutraum kein Verfahrweg das Drahtausziehende freigehalten werden muss und der Nutraum vollständig bewickelt werden kann. Dies führt zu einer wesentlichen Steigerung des Nutfüllfaktors bzw. der Spulenwindung pro Zahn, was zu einer Leistungssteigerung der elektrischen Maschine führt oder bei gleicher Leistung der elektrischen Maschine eine Verkürzung des Hauptelements ermöglicht. Die gewünschte Platzierung des jeweils eingezogenen Wickeldrahtabschnitts wird durch die Stufungen an den Stirnseiten der Maske gewährleistet, über die jeweils bei Durchführung einer Relativverdrehung von Drahtausziehende und Körper der Wickeldraht gezogen wird.

Durch die in den weiteren Ansprüchen aufgeführten Maßnahmen sind vorteilhafte Weiterbildungen und Verbesserungen des im Anspruch 1 angegebenen Verfahrens möglich.

Gemäß einer vorteilhaften Ausführungsform der Erfindung wird die Maske an einem Stirnende mit einem im Querschnitt U-förmigen Verlegekanal mit zwei Kanalwänden und einem Kanalboden versehen, dessen eine Kanalwand den Rückschlussring abdeckt und dessen andere Kanalwand und dessen Kanalboden von voneinander beabstandeten Segmenten gebildet sind, deren radiale Mittellinien mit den radialen Mittellinien der Zähne fluchten. Nach Fertigwickeln einer Ringspule wird der Wickeldraht von dieser Ringspule zum nächsten zu bewickelnden Zahn durch die Lücken zwischen den Segmenten hindurch und im Verlegekanal geführt. Durch diese Maßnahmen wird eine vereinfachte Verschaltung der Spulen erzielt und keine Verschaltungselemente benötigt. Die Kontaktierung der elektrischen Wicklung beschränkt sich auf die Kontaktierung der einzelnen Wicklungsstränge, bei einer Dreiphasenwicklung also auf drei Kontaktstelle für je einen Wicklungsstrang und ggf. eine Kontaktstelle für den Sternpunkt. Diese Kontaktierung wird mittels Kontaktfahnen ausgeführt, wozu gemäß einer vorteilhaften Ausführungsform der Erfindung die Kontaktfahnen in ausgewählte, axial sich erstreckende Aufnahmenschächte, die in den Segmenten auf der einen Stirnseite der Maske vorhanden sind, eingesetzt werden und der Wickeldraht an die Kontaktfahnen elektrisch angeschlossen wird.

Eine Maske zur Herstellung einer elektrischen Isolierung zwischen dem magnetisch leitfähigen Körper und einer in diesen eingewickelten elektrischen Wicklung, die zugleich als Wickelhilfe bei dem erfindungsgemäßen Verfahren verwendet wird, ist in dem unabhängigen Anspruch 5 und in den von Anspruch 5 abhängigen Ansprüchen 6 bis 12 angegeben.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Stirnansicht eines Stators für eine Innenläufermaschine,
- Fig. 2: eine Stirnansicht eines Statorkörpers des Stators in Fig. 1,
- Fig. 3: eine perspektivische Ansicht eines Oberteils einer auf den Statorkörper aufgesetzten Maske gemäß Fig. 1,
- Fig. 4: ausschnittweise einen Längsschnitt gemäß Linie IV - IV in Fig. 3,
- Fig. 5 bis 9: jeweils ausschnittweise eine schematisierte Draufsicht eines Statorkörpers und einer Drahtführungsvorrichtung in fünf verschiedenen Zuständen beim Einwickeln einer Spule der Statorwicklung in Fig. 1,
- Fig. 10 und 11: jeweils ausschnittweise eine gleiche Schnittdarstellung wie in Fig. 4 mit aufgewickelter Spule der Statorwicklung,
- Fig. 12: eine Stirnansicht eines Statorkörpers gemäß einem weiteren Ausführungsbeispiel,.
- Fig. 13: eine Illustrierung eines bekannten Wickelverfahrens nach dem Stand der Technik in vier verschiedenen Wickelschritten a bis d.

### Beschreibung des Ausführungsbeispiels

Das Hauptelement für eine elektrische Maschine wird nachfolgend am Beispiel eines Stators einer Innenläufermaschine, z.B. eines Gleichstrommotors, beschrieben. Das Hauptelement kann aber in gleicher Ausführung auch ein Rotor einer Außenläufermaschine sein, so dass die nachfolgend verwendeten Begriffe Statorkörper für den magnetisch leitfähigen Körper und Statorwicklung für die elektrische Wicklung auch synonym für Rotorkörper und Rotorwicklung einer Außenläufermaschine stehen.

Der Stator weist einen als Statorkörper 21 bezeichneten Körper aus magnetisch leitfähigem Material, der in bekannter Weise aus einer Vielzahl von zu einem Stanzpaket zusammengesetzten Einzellamellen besteht, sowie eine Statorwicklung 22 bezeichnete elektrische Wicklung auf. Der Statorkörpers 21 besteht aus einem Rückschlussring 24 und einer Mehrzahl von Zähnen 25 mit Zahnschaft 251 und Zahnschuh 252. Die Zähne 25 sind um gleiche Umfangswinkel zueinander versetzt am Rückschlussring 24, von diesem radial nach innen abstehend angeordnet und tragen am freien Ende ihrer Zahnschäfte 251 die Zahnschuhe 252. Die Zähne 25 schließen zwischen sich axial verlaufende Nuten 26 ein, die sich zu dem vom Rückschlussring 24 gebildeten Nutgrund 261 verbreitern und deren vom Nutgrund 261 abgekehrte Nutöffnung von den Zahnschuhen 252 der beiden jeweils eine Nut 26 einschließenden Zähne 25 bis auf einen Nutspalt 262 verschlossen ist.

Die Statorwicklung 22 besteht aus miteinander verschalteten Spulen 221, die mit einem Wickeldraht 27 gegenüber dem Statorkörper 21 elektrisch isoliert in mehreren Wickellagen auf die Zähne 25 des Statorkörpers 21 so aufgewickelt sind, dass ihre axial sich erstreckenden Spulenseiten in den Nuten 26 einliegen und ihre bogenförmigen Spulenköpfe die Stirnseiten der Zahnschäfte 251 überdecken.

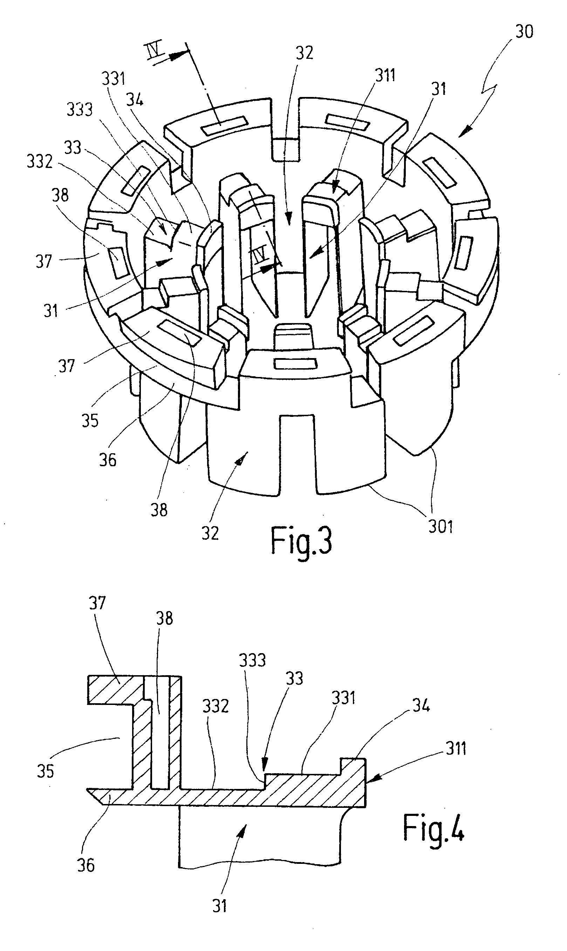

Zur elektrischen Isolation zwischen Statorkörper 21 und Statorwicklung 22 ist eine Maske 30 aus elektrisch isolierendem Material, z.B. Kunststoff, vorgesehen, die axial zweigeteilt, vorzugsweise hälftig geteilt, ist und deren oberer Teil in Fig. 3 perspektivisch dargestellt ist. Der untere Teil der Maske 30 ist bis auf eine später noch erläuterte Einzelheit identisch ausgebildet. Der obere Teil der Maske 30 ist von der einen Stirnseite des Statorkörpers 21 her und der untere Teil der Maske 30 von der anderen Stirnseite des Statorkörpers 21 her auf den Statorkörper 21 aufgeschoben, so dass sie sich unter Verbleib eines umlaufenden Spaltes zu der Maske 30 zusammenfügen. Die Schnittstelle der beiden Maskenteile ist in Fig. 3 mit 301 gekennzeichnet. Die Maske 30 ist so ausgebildet, dass sie neben ihrer Isolationsfunktion als Wickelhilfe beim Einwickeln des die Spulen 221 der Statorwicklung 22 formenden Wickeldrahts 27 genutzt werden kann, was ein nachfolgend noch beschriebenes, vorteilhaftes Wickelverfahren für die Statorwicklung 22 ermöglicht, das zu einem hohen Nutfüllfaktor führt.

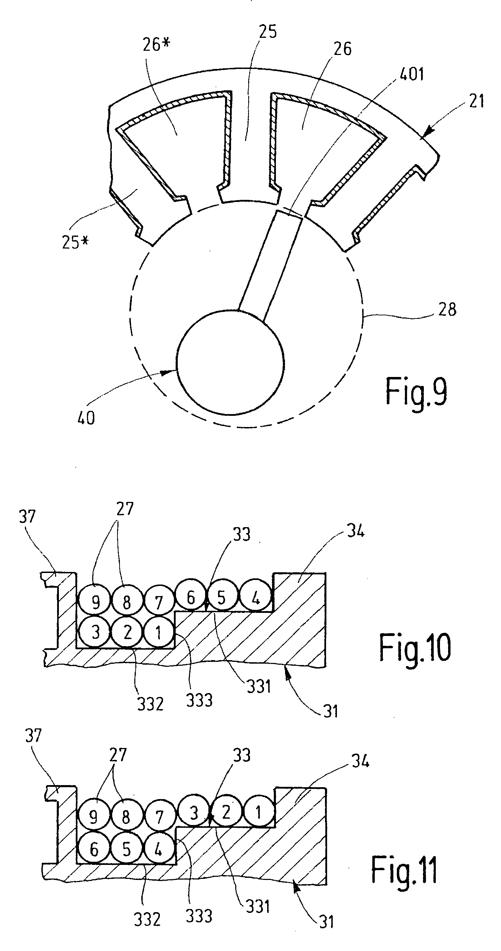

Die als Kunststoffspritzteil hergestellte Maske 30 weist eine Zahnverkleidung 31 zum Abdecken der Seiten- und Stirnflächen der Zahnschäfte 251 und eine Nutgrundabdeckung oder Nutgrundbekleidung 32 zum Abdecken der die Nutgründe bildenden Abschnitte des Rückschlussrings 24 auf. Die Nutgrundbekleidung 32 ist einstückig mit der Zahnverkleidung 31 und verbindet die einzelnen Ausprägungen der Zahnverkleidung 31 an den einzelnen Zähne 25. Wie aus der perspektivischen Ansicht in Fig. 3 und insbesondere aus der Schnittdarstellung einer Ausprägung der Zahnverkleidung 31 für einen Zahn 25 in Fig. 4 zu sehen ist, ist in jedem der die Stirnseiten der Zahnschäfte 251 abdeckenden Bereiche 311 der Zahnverkleidung 31 eine radial sich erstreckende Stufung 33 mit einer Stufe 331, einem an die Stufe 331 hin zur Nutgrundbekleidung 32 sich anschließenden, gegenüber der Stufe 331 axial zurückversetzten Stufungsabschnitt 332 und einer zur Nutgrundbekleidung 32 weisenden Stufenkante 333, die sich axial von dem Stufungsabschnitt 332 bis zur Stufe 331 erstreckt. Die Höhe der Stufenkante 333 ist wenig größer als der Außendurchmesser des Wickeldrahts 27 bemessen, wie dies aus der ausschnittweisen Schnittdarstellung in Fig. 10 und 11 zu erkennen ist. Die Radiallänge des Stufungsabschnitts 332 und der Stufe 331 betragen jeweils ein ganzzahliges Vielfaches des Außendurchmessers des Wickeldrahts 27. Im Beispiel der Fig. 10 und 11 sind Stufe 331 und Stufungsabschnitt 332 gleich lang bemessen, sie können jedoch ein unterschiedliches Vielfaches des Außendurchmessers des Wickeldrahts 27 besitzen. An dem von der Stufenkante 333 abgekehrten Ende der Stufe 331 ist in jedem der Stirnseiten der Zahnschäfte 251 abdeckenden Bereiche 311 der Zahnverkleidung 31 ein Halteflansch 34 einstückig angeformt. Die axiale Vorstehhöhe des Halteflansch 34 ist entsprechend der Anzahl der in die Nuten 26 eingewickelten Wickellagen der Spulen 221 bemessen. Der Halteflansch 34 verhindert ein Abgleiten von Wickellagen oder Windungen der Spulen 221 der Statorwicklung 22.Die Stufungen 33 können mehr als nur eine Stufe 331 aufweisen.

Der untere Maskenteil der Maske 30 ist in identischer Weise ausgebildet wie der bis hier beschriebene obere Maskenteil der Maske 30. Gegenüber dem unteren Maskenteil weist der obere Maskenteil noch zusätzlich eine an seiner Stirnseite angeformte Verlegehilfe für den Wickeldraht 27 auf, um die Verschaltung der Spulen 221, also das Führen des Wickeldrahts 27 von einer Spule 221 zur nächsten Spule 221 der Statorwicklung 22 zu erleichtern. Hierzu ist an der vom unteren Maskenteil der Maske 30 abgekehrten Stirnseite des oberen Maskenteils der Maske 30 ein im Querschnitt U-förmiger Verlegekanal 35 mit zwei Kanalwänden und einem die Kanalwände miteinander verbindenden Kanalboden vorgesehen, der mit einer radial nach außen weisenden Öffnung über nahezu den gesamten Umfang der Maske 30 umläuft. Die eine Kanalwand bildet eine Abdeckung 36 für die Stirnfläche des hohlzylindrischen Rückschlussrings 22, und die andere Kanalwand und der Kanalboden werden von im Längsschnitt etwa L-förmigen Segmenten 37 gebildet, die voneinander beabstandet derart angeordnet sind, dass ihre radialen Symmetrie- oder Mittellinien mit den Mittellinien der einzelnen Ausprägungen der Zahnverkleidung 31 an den Zähnen 25 fluchten. In dem in Fig. 3 gezeigten Beispiel der Maske 30 wird der Verlegekanal 35 von sieben der insgesamt neun vorhandenen Segmente 37 gebildet und endet an den beiden in Fig. 3 vorn liegenden Segmenten 37. Alternativ kann der Verlegekanal 35 aber auch durch diese beiden Segmente 37 hindurchgeführt werden, so dass er sich vollständig schließt.

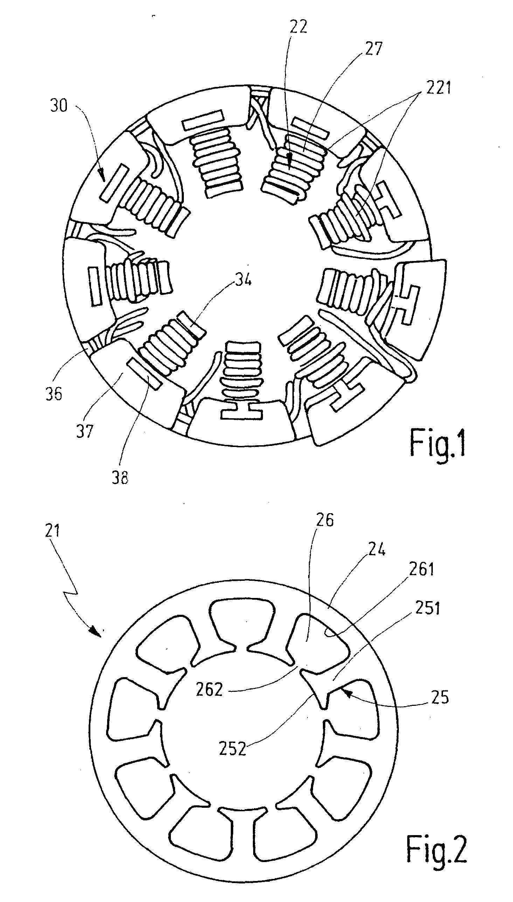

In jedem der Segmente 37 ist ein axialer Aufnahmeschacht 38 zum Einstecken von hier nicht dargestellten Kontaktfahnen ausgebildet. Ein Aufnahmeschacht 38 ist im Schnitt in Fig. 4 zu sehen. Die Kontaktfahnen dienen zum elektrischen Anschluss der einzelnen Stränge der Statorwicklung 22, die im Ausführungsbeispiel der Fig. 1 aus drei Wicklungssträngen mit jeweils drei innerhalb eines Wicklungsstrangs um 120° elektrisch versetzten Spulen 221 besteht.

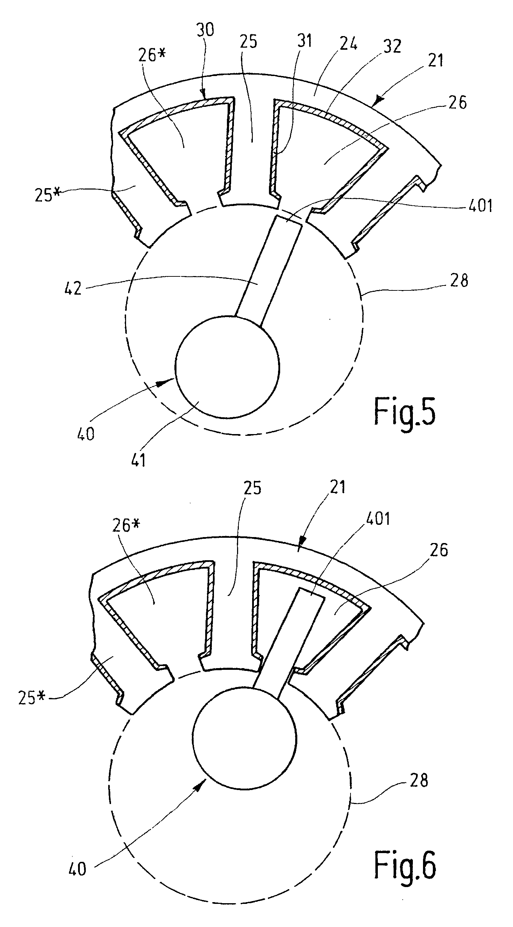

Das Aufwickeln der Statorwicklung 22 auf den Statorkörper 21 wird nachstehend anhand der Fig. 5 bis 11 erläutert.

Auf den Statorkörper 21 werden die beiden Maskenteile der Maske 30 von beiden Stirnseiten her axial aufgeschoben, bis sich die Schnittstellen 301 der beiden Maskenteile mit Spaltabstand gegenüberliegen. Alternativ kann der Statorkörper 21 auch mit der Maske 30 in der beschriebenen Ausgestaltung umspritzt werden, wobei in diesem Fall auf den Spalt zwischen den Maskenteilen verzichtet wird. Der mit der Maske 30 versehene Statorkörper 21 wird in einen Wickelautomaten eingesetzt und kann beim Wickeln um definierte Schaltschritte, die jeweils einer Zahnteilung des Statorkörpers 21 entsprechen, in Umfangsrichtung in beide Richtungen gedreht werden. Im hohlen Innern des Statorkörpers 21 ist eine Drahtführungsvorrichtung 40 so angeordnet, dass sie einen axialen und radialen Hub auszuführen vermag, jeweils bezogen auf den Statorkörper 21. Die Drahtführungsvorrichtung 40 umfasst eine Nadel 41, die in Axialrichtung verschiebbar ist, und eine von der Nadel 41 radial abstehende Düse 42 mit einem Drahtausziehende 401. Die Nadel 41 führt einen Axialhub aus zwischen einer unteren Endposition, in welcher die Düse 42 unterhalb der Stirnseite des Statorkörpers 21 liegt, und einer oberen Endposition, in welcher die Düse 42 oberhalb der oberen Stirnseite des Statorkörpers 21 liegt. In ihren Endpositionen vermag die Nadel 41 eine radiale Hubbewegung auszuführen, durch die sich das Drahtausziehende 401 der Düse 42 über die Stirnflächen der axial offenen Nuten 26 hinwegschiebt und wieder hinter den Zahnschuhkreis 28 zurückzieht.

In Fig. 5 bis 9 sind die Drahtführungsvorrichtung 40 mit Nadel 41 und Düse 42 sowie der im Wickelautomaten aufgenommene Statorkörper 21 nur schematisch skizziert, wobei die auf den Statorkörper 21 aufgeschobenen Maske 30 mit Zahnverkleidung 31, und Nutgrundbekleidung 32 der Übersichtlichkeit halber im Schnitt dargestellt ist. Der hier nicht dargestellte Wickeldraht 27 wird von einem Vorratswickel abgezogen durch die Nadel 41 geführt und über die Düse 42 aus dem Drahtausziehende 401 ausgezogen.

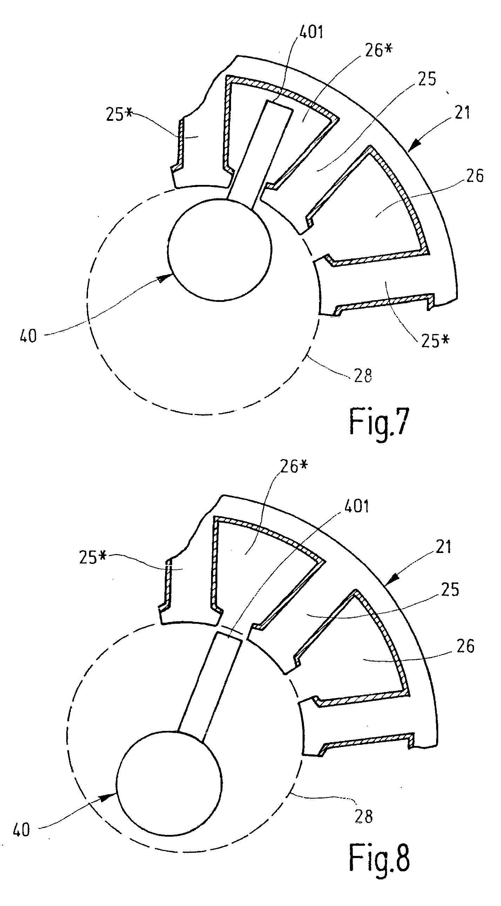

In Fig. 5 befindet sich die Drahtführungsvorrichtung 40 in ihrer unteren Endposition. Der aus dem Drahtausziehende 401 ausgezogene Abschnitt des Wickeldrahts 27 ist an der oberen Stirnseite der Maske 30 festgelegt und innerhalb der Nut 26 nach unten gezogen. In der unteren Endposition führt die Drahtführungsvorrichtung 40 nunmehr eine Radialbewegung aus, wobei das Drahtausziehende 401 über die untere Stirnfläche der Nut 26 hinwegstreicht und den Wickeldraht 27 an den gewünschten Platz legt (Fig. 6). In dieser Stellung der Drahtführungsvorrichtung 40 wird der Statorkörper 21 um eine Zahnteilung im Uhrzeigersinn gedreht, so dass das Drahtausziehende 401 der Drahtführungsvorrichtung 40 unter der benachbarten Nut 26* liegt (Fig. 7). Dadurch legt sich der Wickeldraht in die Stufung 33 in dem die untere Stirnseite des Zahns 25 abdeckenden Bereich 311 der Maske 30 ein. Nunmehr fährt die Drahtführungsvorrichtung 40 radial soweit zurück, dass das Drahtausziehende 401 innerhalb des Zahnschuhkreises 28 des Statorkörpers zu liegen kommt (Fig. 8). Danach führt die Drahtführungsvorrichtung 40 eine Hubbewegung in ihre obere Endposition aus und schiebt hier durch eine Radialbewegung das Drahtausziehende 401 über die obere Stirnfläche der Nut 26* bis der Wickeldraht an der gewünschten Position liegt. Nunmehr wird der Statorkörper 21 um eine Zahnteilung wieder zurückgedreht, wobei sich der Wickeldraht in die Stufung 33 in dem die obere Stirnseite des Zahnschaftes 241 abdeckende Bereiche 311 der Maske 30 einlegt (Fig. 10). Die Drahtführungsvorrichtung 40 wird wieder radial verschoben, so dass sich das Drahtausziehende 401 wieder hinter den Zahnschuhkreis 28 zurückzieht (Fig. 9). Dann erfolgt wieder eine Hubbewegung der Drahtführungsvorrichtung 40 in die untere Endposition, wie dies in Fig. 5 dargestellt ist. Diese Schaltschritte wiederholen sich solange, bis alle Windungen einer Spule 221 auf den Zahn 13 aufgewickelt sind.

In Fig. 10 sind dabei die im Verlauf des Wickelvorgangs in die Stufung 33 eingelegten Windungen des Wickeldrahts 27 mit 1 bis 9 durchnumeriert. Wie aus Fig. 10 zu erkennen ist, wird dabei die erste Windung 1, die um den Zahn 25 gewickelt wird, beim Zurückziehen des Drahtausziehendes 401 hinter den Zahnschuhkreis 28 an der Stufenkante 333 zurückgehalten und wird nicht wieder durch den Nutspalt 362 hindurch aus der Nut 26 herausgezogen. In gleicher Weise verhakt sich die nächste Windung 2 hinter der in dem axial zurückversetzten Stufungsabschnitt 332 liegenden ersten Windung 1 und ebenso die dritte Windung 3 hinter der zweiten Windung 2. Die vierte Windung 4 wird auf die Stufe 331 aufgelegt und vom Halteflansch 34 beim Zurückziehen des Drahtausziehendes 401 hinter den Zahnschuhkreis 28 zurückgehalten. Nachfolgend werden die Windungen 5 und 6 eingelegt, die sich auf die Stufe 331 auflegen und von der jeweils vorherigen Windung zurückgehalten werden, und die Windungen 7 bis 9 eingelegt, die sich auf die zuvor gewickelte Wickellage mit den Windungen 1, 2 und 3 auflegen und von der Windung 3 bzw. von der jeweils zuvor eingelegten Windung 7 und 8 zurückgehalten werden.

Ist die Spule 221 komplett auf den Zahn 25 aufgewickelt, so wird der Statorkörper 21 bis zum nächsten Zahn 25, der die zum Wicklungsstrang gehörige nächste Spule 221 aufzunehmen hat, geschwenkt, wobei der Wickeldraht 27 in den Verlegekanal 35 eingelegt wird. Die Drahtführungsvorrichtung 40 legt nunmehr durch axiales Verschieben des Drahtausziehendes 401 nach unten die erste Windung in die neue Nut 26 ein. Danach nimmt die Drahtführungsvorrichtung 40 wieder die in Fig. 5 dargestellte Stellung relativ zum Statorkörper 21 am nächsten Zahn 25 ein, so dass der nächste Zahn 25 in der gleichen Weise wie beschrieben mit der nächsten Spule 221 bewickelt wird.

Das Einlegen der einzelnen Windungen 1 bis 9 der Spule 221 kann auch in der in Fig. 11 dargestellten Konfiguration erfolgen. Dabei werden die ersten drei eingewickelten Windungen 1, 2 und 3 so in die Nut 26 eingezogen, dass ihre über die Stufung 33 verlaufende Abschnitte auf der Stufe 331 aufliegen und beim Wickeln von dem Halteflansch 34 zurückgehalten werden. Die Windungen 4 bis 6 werden dann in die untere Lage eingewickelt, wobei die Windungen in den axial zurückversetzten Stufungsabschnitt 332 der Stufung 33 nacheinander eingelegt werden und beim Wickeln von der Stufenkante 333 zurückgehalten werden. Danach wird die obere Wickellage mit den Windungen 7, 8 und 9 fertiggestellt, wobei die einzelnen Windungen von den zuerst eingelegten Windungen 1, 2 und 3 zurückgehalten werden.

Beim Wickeln der Spulen 221 wird der Wickeldraht 27 in Kontaktfahnen eingehängt, die in durch die Stranglage der Wicklungsstränge bedingten, ausgewählten Aufnahmeschächte 38 der Maske 30 vor der Bewicklung eingesetzt worden sind.

Das Wickelverfahren eignet sich auch für einen magnetisch leitfähigen Körper 21', dessen Stirnansicht in Fig. 12 dargestellt ist. Dieser Körper 21' kann ein Statorkörper einer Außenläufermaschine oder ein Rotor einer Innenläufermaschine sein. In diesem Fall ist die auf den Körper aufzuschiebende Maske dahingehend zu modifizieren, dass der Verlegekanal innen liegt und die Stirnseite des Rückschlussrings 24' abdeckt. Beim Wickelvorgang wird die Drahtführungsvorrichtung 40 außen platziert und der Radialhub der Drahtführungsvorrichtung 40 so ausgeführt, dass das Drahtausziehende 401 vor der axialen Hubbewegung der Drahtführungsvorrichtung 40 aus dem Zahnschuhkreis in Fig. 12 ausgetreten ist. In Fig. 12 sind die entsprechenden Teile des Körpers 21' mit den gleichen Bezugszeichen wie in Fig. 2 bezeichnet, jedoch zur Unterscheidung mit einem Beistrich gekennzeichnet, also der Rückschlussring mit 24', die Zähne mit 25' und die Nuten mit 26'.

## Patentansprüche

1. Verfahren zum Aufwickeln einer elektrischen Wicklung (22) aus einem Wickeldraht (27) auf einen magnetisch leitfähigen Körper (21) eines Hauptelements einer elektrischen Maschine, der einen Rückschlussring (24) und davon insbesondere einstückig abstehende, zwischen sich axial verlaufende, stirnseitig offene Nuten (26) ausbildende Zähne (25) mit Zahnschäften (251) und die Nutöffnungen bis auf einen Nutspalt (262) abdeckenden Zahnschuhen (252) aufweist, bei welchem der Wickeldraht (27) mittels einer Drahtführungsvorrichtung (40) mit Drahtausziehende (401), das mindestens eine axiale Hubbewegung ausführt, und mittels einer Relativverdrehung von Drahtausziehende (401) und Körper (21) in Körperumfangsrichtung, die jeweils bei über den Stirnflächen der Nuten (26) stehendem Drahtausziehende (40) erfolgt, fortlaufend in die Nuten (26) eingelegt und über die Stirnseiten der Zahnschäfte (251) geführt zu Ringspulen (221) aufgewickelt wird, die am Zahnschaft durch Drahtzug festgezogen sind, wobei auf den Körper (21) vor dessen Bewicklung eine den Körper (21) im Zahnbereich mit einer Zahnverkleidung (31) und im Nutbereich mit einer Nutgrundbekleidung (32) abdeckende Maske (30) aus elektrisch isolierendem Material, vorzugsweise aus Kunststoff, aufgesetzt und beim Einwickeln des Wickeldrahts (27) als Wickelhilfe zur Positionierung des Wickeldrahts (27) in den Nuten (26) genutzt wird, **dadurch gekennzeichnet, dass** zur Ausbildung der Wickelhilfe die Zahnverkleidung (31) in ihren die Stirnseiten der Zahnschäfte (251) überdeckenden Bereichen (311) jeweils mit einer radial verlaufenden Stufung (33), die mindestens eine Stufe (331) mit einer axial ausgerichteten der Nutgrundbekleidung (32) zugekehrten Stufenkante (333) aufweist und mit einem die Stufe (33) an ihrem von der Nutbekleidung (32) abgekehrten Ende begrenzenden, axial vorstehenden Halteflansch (34) versehen wird und dass der Wickeldraht (27) in einer unteren Wickellage über den zwischen Stufenkante (333) und Nutgrundbekleidung (32) liegenden, zur Stufe (331) axial zurückversetzten Stufungsabschnitt (332) der Stufung (33) und in mindestens einer zweiten Wickellage über die untere Wickellage und die mindestens eine Stufe (331) gezogen wird und hierzu die Drahtführungsvorrichtung (40) so gesteuert wird, dass deren Drahtausziehende (401) während der axialen Hubbewegung stets außerhalb der Nuten (26) vor dem Zahnschuhkreis (28) geführt wird und über die Stirnflächen der Nuten (26) hinweg eine radiale Hubbewegung ausführt, und dass die Relativverdrehung von Drahtausziehende (40) und Statorkörper (21)durch Drehen des Körpers (21) durchgeführt wird.

2. Verfahren nach Anspruch 1, **dadurch gekennzeichnet, dass** die Maske (30) an einem Stirnende mit einem im Querschnitt U-förmigen Verlegekanal (35) mit zwei Kanalwänden und einem Kanalboden versehen wird, dessen eine Kanalwand eine Abdeckung (36) für die Stirnfläche des Rückschlussrings (24) bildet und dessen andere Kanalwand und dessen Kanalboden von voneinander beabstandeten Segmenten (37) gebildet sind, deren radiale Symmetrielinien mit den radialen Mittellinien der Zähne (25) fluchten, und dass beim Wickeln der Wickeldraht (27) von der einen Ringspule (221) zur nächsten durch die zwischen den Segmenten (37) vorhandenen Lücken und durch den Verlegekanal (35) geführt wird.

3. Verfahren nach Anspruch 2, **dadurch gekennzeichnet, dass** in mindestens einem Segment (37), vorzugsweise in jedem Segment (37), ein axialer Aufnahmeschacht (38) für eine Kontaktfahne ausgebildet ist und dass Kontaktfahnen in ausgewählte Aufnahmeschächte (38) eingesetzt und mit dem Wickeldraht (27) belegt werden.

4. Verfahren nach einem der Ansprüche 1 bis 3, **dadurch gekennzeichnet, dass** die Maske (30) axial, vorzugsweise hälftig, geteilt ist und dass jeweils ein Maskenteil von jeweils einer Stirnseite des Körpers (21) aus auf den Körper (21) aufgeschoben wird.

5. Maske zur Herstellung einer elektrischen Isolierung zwischen einem magnetisch leitfähigen Körper (21) mit Rückschlussring (24) und angeformten, radial abstehenden, jeweils einen Zahnschaft (251) und einen Zahnschuh (252) aufweisenden Zähnen (25), die zwischen sich axial verlaufende, stirnseitig offene Nuten (26) ausbilden, und einer in Ringspulen (221) auf die Zahnschäfte (251) aufgewickelten elektrischen Wicklung (22) eines Hauptelements einer elektrischen Maschine, die eine Zahnverkleidung (31) zum Abdecken der Längs- und Stirnseiten der Zahnschäfte (251) und eine Nutgrundbekleidung (32) zum Abdecken der die Nutgründe bildenden Abschnitte des Rückschlussrings (24) und eine Wickelhilfe beim Einwickeln eines die Spulen (221) formenden Wickeldrahts (27) aufweist **dadurch gekennzeichnet, dass** die Wickelhilfe eine in jedem der die Stirnseiten der Zahnschäfte (251) abdeckenden Bereiche (311) der Zahnverkleidung (31) angeordnete, radial sich erstreckende Stufung (33) mit mindestens einer Stufe (331) mit einer axial sich erstreckenden, der Nutgrundbekleidung (32) zugekehrten Stufenkante (333) aufweist, die an ihrem von der Nutgrundbekleidung (32) abgekehrten freien Ende von einem axial vorstehenden Halteflansch (34) begrenzt ist.

6. Maske nach Anspruch 8, **dadurch gekennzeichnet, dass** die axiale Höhe der mindestens einen Stufe (331) wenig größer als der Außendurchmesser des Wickeldrahts (27) und die radiale Länge der Stufe (331) und eines sich daran radial anschließenden, zur Stufe (331) axial zurückversetzten Stufungsabschnitts (332) jeweils ein ganzzahliges Vielfaches des Außendurchmessers des Wickeldrahts (27) beträgt.

7. Maske nach Anspruch 5 oder 6, **dadurch gekennzeichnet, dass** an einem der Stirnenden der Maske (30) mindestens ein im Querschnitt U-förmig ausgebildeter Verlegekanal (35) mit zwei Kanalwänden und einem Kanalboden angeformt ist, dessen eine Kanalwand eine Abdeckung (36) für die Stirnfläche des Rückschlussrings (24) bildet und dessen andere Kanalwand und dessen Kanalboden von voneinander beabstandeten Segmenten (37) gebildet sind, deren radiale Symmetrielinien jeweils mit der radialen Mittellinie einer einen Zahnschaft (251) umgebenden Ausprägung der Zahnverkleidung (31) fluchten.

8. Maske nach Anspruch 7, **dadurch gekennzeichnet, dass** in mindestens einem Segment (37) ein axialer Aufnahmeschacht (38) zum Einstecken einer Kontaktfahne für den elektrischen Anschluss der Wicklung (22) angeordnet ist.

9. Maske nach einem der Ansprüche 5 bis 8, **dadurch gekennzeichnet, dass** die Zahnverkleidung (31) und die Nutgrundbekleidung (32) einstückig ausgebildet und axial, vorzugsweise hälftig, geteilt sind.

10. Maske nach Anspruch 9, **dadurch gekennzeichnet, dass** der Verlegekanal (35) mit Aufnahmeschächten (38) an dem einen Maskenteil einstückig angeformt ist.

11. Maske nach einem der Ansprüche 5 bis 10, **dadurch gekennzeichnet, dass** zwischen der Nutgrundbekleidung (32) und der Stufenkante (333) der Stufung (33) ein axial zurückversetzter Stufungsabschnitt (332) zur Aufnahme einer unteren Wickellage der von dem Wickeldraht (27)geformten Ringspulen (221) vorhanden ist und die mindestens eine Stufe (331) der Stufung (33) zusammen mit der in dem Stufungsabschnitt (332) einliegenden unteren Wickellage der Ringspulen (221) zur Aufnahme einer weiteren Wickellage der Ringspulen (221) dient.

12. Hauptelement nach Anspruch 11, **dadurch gekennzeichnet, dass** die Maske (30) aus Isoliermaterial direkt auf den Körper (21) aufgespritzt ist.

## Claims

1. Method for winding an electrical winding (22), which is composed of a winding wire (27), onto a magnetically permeable body (21) of a main element of an electrical machine, which body has a magnetic return ring (24) and teeth (25) which project, in particular in an integral manner, from the said magnetic return ring, which are formed between slots (26) that run in the axial direction and are open at the ends, and which have tooth shafts (251) and tooth shoes (252) which cover the slot openings apart from a slot gap (262), in which method the winding wire (27) is continuously inserted into the slots (26) by means of a wire-guiding apparatus (40) with a wire pull-out end (401), which executes at least one axial reciprocating movement, and by means of a relative rotation of the wire pull-out end (401) and the body (21) in the circumferential direction of the body, the said rotation being performed in each case with the wire pull-out end (401) situated over the end areas of the slots (26), and is wound on, in a manner guided over the end faces of the tooth shafts (251), so as to form ring coils (221) which are tightened on the tooth shaft by pulling the wire, wherein, before the body is wound, a mask (30), which is composed of electrically insulating material, preferably of plastic, and covers the body (21) with a tooth covering (31) in the tooth region and with a slot base lining (32) in the slot region, is fitted onto the body (21) and, when the winding wire (27) is wound in, is used as a winding aid for positioning the winding wire (27) into the slots (26), **characterized in that**, in order to form the winding aid, the tooth covering (31) is provided, in its regions (311) which cover the end faces of the tooth shafts (251), in each case with a radially running step arrangement (33), which has at least one step (331) with an axially oriented step edge (333) which faces the slot base lining (32), and with an axially projecting retaining flange (34) which bounds the step (331) at its end which is averted from the slot base lining (32), and **in that** the winding wire (27) is pulled, in a lower winding layer, over the step arrangement section (332) of the step arrangement (33) which is situated between the step edge (333) and the slot base lining (32) and is axially recessed in relation to the step (331), and, in at least a second winding layer, is pulled over the lower winding layer and the at least one step (331), and, to this end, the wire-guiding apparatus (40) is controlled such that the wire pull-out end (401) of the said wire-guiding apparatus is always guided outside the slots (26) in front of the tooth shoe circuit (28) during the axial reciprocating movement, and a radial reciprocating movement is executed over the end areas of the slots (26), and **in that** the relative rotation of the wire pull-out end (401) and the stator body (21) is carried out by rotating the body (21).

2. Method according to Claim 1, **characterized in that** the mask (30) is provided, at one end, with a laying channel (35) which is U-shaped in cross section and has two channel walls and a channel base, one channel wall of the said laying channel forming a cover (36) for the end area of the magnetic return ring (24) and the other channel wall of the said laying channel and the channel base of the said laying channel being formed from segments (37) which are spaced apart from one another and of which the radial lines of symmetry are in alignment with the radial centre lines of the teeth (25), and **in that**, during winding, the winding wire (27) is guided from one ring coil (221) to the next through the gaps which are present between the segments (37) and through the laying channel (35).

3. Method according to Claim 2, **characterized in that** an axial receiving shaft (38) for a contact lug is formed in at least one segment (37), preferably in each segment (37), and **in that** contact lugs are inserted into selected receiving shafts (38) and occupied by the winding wire (27).

4. Method according to one of Claims 1 to 3, **characterized in that** the mask (30) is divided axially, preferably in half, and **in that** in each case one mask part is pushed onto the body (21) from in each case one end face of the body (21).

5. Mask for establishing electrical insulation between a magnetically permeable body (21) with a magnetic return ring (24) and integrally formed, radially projecting teeth (25) which each have a tooth shaft (251) and a tooth shoe (252) and which between them form slots (26), which run in the axial direction and are open at the ends, and an electrical winding (22), which is wound onto the tooth shafts (251) in ring coils (221), of a main element of an electrical machine, which mask has a tooth covering (31) for covering the longitudinal and end faces of the tooth shafts (251) and a slot base lining (32) for covering the sections of the magnetic return ring (24) which form the slot bases, and a winding aid for winding in a winding wire (27) which forms the coils (221), **characterized in that** the winding aid has a radially extending step arrangement (33) which is arranged in each of the regions (311) of the tooth covering (31) which cover the end faces of the tooth shafts (251) and has at least one step (331) with an axially extending step edge (333) which faces the slot base lining (32), which step is delimited by an axially projecting retaining flange (34) at its free end which is averted from the slot base lining (32).

6. Mask according to Claim 8, **characterized in that** the axial height of the at least one step (331) is slightly greater than the outside diameter of the winding wire (27), and the radial length of the step (331) and a step arrangement section (332), which radially adjoins the said step and is axially recessed in relation to the step (331), in each case amounts to an integer multiple of the outside diameter of the winding wire (27).

7. Mask according to Claim 5 or 6, **characterized in that** at least one laying channel (35) which is of U-shaped design in cross section and has two channel walls and a channel base is integrally formed on one of the ends of the mask (30), one channel wall of the said laying channel forming a cover (36) for the end area of the magnetic return ring (24) and the other channel wall of the said laying channel and the channel base of the said laying channel being formed from segments (37) which are spaced apart from one another and of which the radial lines of symmetry are each in alignment with the radial centre line of a shaped portion of the tooth covering (31) which surrounds a tooth shaft (251).

8. Mask according to Claim 7, **characterized in that** an axial receiving shaft (38) for the insertion of a contact lug for the electrical connection of the winding (22) is arranged in at least one segment (37).

9. Mask according to one of Claims 5 to 8, **characterized in that** the tooth covering (31) and the slot base lining (32) are integrally formed and are divided axially, preferably in half.

10. Mask according to Claim 9, **characterized in that** the laying channel (35) with receiving shafts (38) is integrally formed on one mask part.

11. Mask according to one of Claims 5 to 10, **characterized in that** an axially recessed step arrangement section (332) for receiving a lower winding layer of the ring coils (221) which are formed by the winding wire (27) is present between the slot base lining (32) and the step edge (333) of the step arrangement (33), and the at least one step (331) of the step arrangement (33) serves, together with the lower winding layer of the ring coils (221) which is situated in the step arrangement section (332), to receive a further winding layer of the ring coils (221).

12. Main element, **characterized in that** the mask (30) which is composed of insulating material is sprayed directly onto the body (21).

## Revendications

1. Procédé pour enrouler un bobinage électrique (22) constitué d'un fil de bobinage (27) sur un corps conducteur magnétique (21) d'un élément principal d'une machine électrique qui présente une bague de reflux (24) et des dents (25) faisant notamment saillie d'une seule pièce depuis celle-ci, formant entre elles des rainures (26) ouvertes du côté frontal, s'étendant axialement, avec des tiges de dents (251) et des pieds de dents (252) couvrant les ouvertures de rainure à l'exception d'une fente de rainure (262), le fil de bobinage (27) étant posé en continu dans les rainures (26) au moyen d'un dispositif de guidage de fil (40) avec une extrémité d'étirement de fil (401), laquelle effectue au moins un mouvement de course axial, et au moyen d'une rotation relative de l'extrémité d'étirement de fil (401) et du corps (21) dans la direction périphérique du corps, qui se produit à chaque fois lorsque l'extrémité d'étirement de fil (401) se situe au-dessus des faces frontales des rainures (26), et le fil de bobinage étant bobiné en bobines annulaires (221) en étant guidé sur les côtés frontaux des tiges de dents (251), les bobines annulaires étant serrées sur la tige de dent par traction du fil, un masque (30) en matériau électriquement isolant, de préférence en plastique, recouvrant le corps (21) dans la région des dents avec un revêtement de dent (31) et dans la région des rainures avec un revêtement de base de rainure (32), étant posé sur le corps (21) avant son bobinage et lors de l'enroulement du fil de bobinage (27), étant utilisé en tant qu'auxiliaire de bobinage pour positionner le fil de bobinage (27) dans les rainures (26), **caractérisé en ce que** pour réaliser l'auxiliaire de bobinage, le revêtement de dent (31) est pourvu, dans ses régions (311) recouvrant les côtés frontaux des tiges de dents (251), à chaque fois d'un gradin (33) s'étendant radialement, qui présente au moins un étage (331) avec une arête d'étage (333) orientée axialement et tournée vers le revêtement de base de rainure (32), et d'une bride de retenue (34) saillant axialement, limitant l'étage (331) au niveau de son extrémité opposée au revêtement de base de rainure (32) et **en ce que** le fil de bobinage (27) est tiré, dans une couche de bobinage inférieure, par-dessus la portion de gradin (332) du gradin (33) en retrait axialement par rapport à l'étage (331), située entre l'arête d'étage (333) et le revêtement de base de rainure (32), et dans au moins une deuxième couche de bobinage par-dessus la couche de bobinage inférieure et l'au moins un étage (331), et à cet effet le dispositif de guidage de fil (40) est commandé de telle sorte que son extrémité d'étirement de fil (401) soit toujours guidée pendant le mouvement de course axial à l'extérieur des rainures (26) devant le cercle de base de dent (28) et effectue au-delà des faces frontales des rainures (26) un mouvement de course radial, et **en ce que** la rotation relative de l'extrémité d'étirement de fil (401) et du corps de stator (21) est effectuée par rotation du corps (21).

2. Procédé selon la revendication 1, **caractérisé en ce que** le masque (30), au niveau d'une extrémité frontale, est pourvu d'un canal de pose (35) en forme de U en section transversale, comprenant deux parois de canal et un fond de canal, dont une paroi de canal forme un recouvrement (36) pour la face frontale de la bague de reflux (24) et dont l'autre paroi de canal et le fond de canal sont formés par des segments (37) espacés les uns des autres, dont les axes de symétrie radiaux sont alignés avec les axes médians radiaux des dents (25), et **en ce que** lors du bobinage, le fil de bobinage (27) est guidé d'une bobine annulaire (221) à la suivante par les espaces prévus entre les segments (37) et par le canal de pose (35).

3. Procédé selon la revendication 2, **caractérisé en ce que** dans au moins un segment (37), de préférence dans chaque segment (37), est réalisé un trou axial de réception (38) pour une fiche de contact et **en ce que** des fiches de contact sont insérées dans des trous de réception sélectionnés (38) et sont entourées avec le fil de bobinage (27).

4. Procédé selon l'une quelconque des revendications 1 à 3, **caractérisé en ce que** le masque (30) est divisé axialement, de préférence en deux moitiés, et **en ce qu'**à chaque fois une partie de masque est poussée à partir d'un côté frontal respectif du corps (21) sur le corps (21).

5. Masque pour fabriquer une isolation électrique entre un corps conducteur magnétique (21) avec une bague de reflux (24) et des dents (25) façonnées, faisant saillie radialement, présentant chacune une tige de dent (251) et un pied de dent (252), lesquelles constituent entre elles des rainures (26) s'étendant axialement, ouvertes du côté frontal, et un bobinage électrique (22) d'un élément principal d'une machine électrique, bobiné dans des bobines annulaires (221) sur les tiges de dents (251), qui présente un revêtement de dent (31) pour recouvrir les côtés longitudinaux et frontaux des tiges de dents (251) et un revêtement de base de rainure (32) pour recouvrir les portions de la bague de reflux (24) formant les bases de rainures et un auxiliaire de bobinage lors de l'enroulement d'un fil de bobinage (27) formant les bobines (221), **caractérisé en ce que** l'auxiliaire de bobinage présente un gradin (33) s'étendant radialement, disposé dans chacune des régions (311) du revêtement de dent (31) recouvrant les côtés frontaux des tiges de dents (251), avec au moins un étage (331) avec une arête d'étage (333) tournée vers le revêtement de base de rainure (32) et s'étendant axialement, qui est limitée au niveau de son extrémité libre opposée au revêtement de base de rainure (32) par une bride de retenue (34) saillant axialement.

6. Masque selon la revendication 8, **caractérisé en ce que** la hauteur axiale de l'au moins un étage (331) est inférieure au diamètre extérieur du fil de bobinage (27) et **en ce que** la longueur radiale de l'étage (331) et d'une portion de gradin (332) en retrait axialement par rapport à l'étage (331) et se raccordant radialement à celui-ci est à chaque fois un multiple entier du diamètre extérieur du fil de bobinage (27).

7. Masque selon la revendication 5 ou 6, **caractérisé en ce qu'**au niveau de l'une des extrémités frontales du masque (30) est façonné au moins un canal de pose (35) réalisé en forme de U en section transversale avec deux parois de canal et un fond de canal, dont une paroi de canal forme un recouvrement (36) pour la face frontale de la bague de reflux (24) et dont l'autre paroi de canal et le fond de canal sont formés par des segments (37) espacés les uns des autres, dont les axes de symétrie radiaux sont alignés à chaque fois avec l'axe médian radial d'une formation emboutie du revêtement de dent (31) entourant une tige de dent (251).

8. Masque selon la revendication 7, **caractérisé en ce que** dans au moins un segment (37) est réalisé un trou axial de réception (38) pour enficher une fiche de contact pour le raccordement électrique du bobinage (22).

9. Masque selon l'une quelconque des revendications 5 à 8, **caractérisé en ce que** le revêtement de dent (31) et le revêtement de base de rainure (32) sont réalisés d'une seule pièce et sont divisés axialement, de préférence en deux moitiés.

10. Masque selon la revendication 9, **caractérisé en ce que** le canal de pose (35) est façonné d'une seule pièce avec des trous de réception (38) au niveau de l'une des parties de masque.

11. Masque selon l'une quelconque des revendications 5 à 10, **caractérisé en ce qu'**entre le revêtement de base de rainure (32) et l'arête d'étage (333) du gradin (33) est prévu une portion de gradin (332) en retrait axialement pour recevoir une couche de bobinage inférieure des bobines annulaires (221) formées par le fil de bobinage (27) et l'au moins un étage (331) du gradin (33) conjointement avec la couche de bobinage inférieure des bobines annulaires (221) située dans la portion d'étage (332) sert à recevoir une couche de bobinage supplémentaire des bobines annulaires (221).

12. Élément principal, **caractérisé en ce que** le masque (30) en matériau isolant est directement pulvérisé sur le corps (21).
